# EUROPÄISCHE PATENTANMELDUNG

(11) **EP 0 917 820 A1**
(43) Veröffentlichungstag der Anmeldung: **26.05.1999**
(21) Anmeldenummer: 98106251.6
(22) Anmeldetag: 06.04.1998
(51) Int. Cl.: A01G 1/00

(54) **Begrünungsmaterial**

(30) Priorität: 07.04.1997 DE 19714414
(71) Anmelder: Terlinden, Christoph, 4232 Hagenberg (AT)
(72) Erfinder: Kaewert, Klaus, 40593 Düsseldorf (DE); Kolossow, Sascha, 29313 Hambüren (DE); Terlinden, Christoph, 4232 Hagenberg (AT)
(74) Vertreter: Kaewert, Klaus

(57) **Zusammenfassung**

Nach der Erfindung werden zur Dachbegrünung Wachstumsmatten (15) verwendet, die aus miteinander verbunden Deck-, Zwischen- und Trägerschicht bestehen, und/oder als Begrünungselemente mit Kunststoffschaumplatten (11) verlegt werden.

## Beschreibung

Die Erfindung betrifft Begrünungsmaterial für die Dachbegrünung, bestehend aus Wachstumsmaterial, Pflanzen und/oder Samen und/oder Wasserspeichermaterial.

Seit langem ist die Begrünung von Dächern bekannt. Relativ häufig ist die Begrünung in nördlichen Ländern zu finden. Die Begrünung hat eine lange Tradition. In früherer Zeit war es üblich, Dächer mit Grassoden einzudecken. Das galt nicht nur für Scheunen und Ställe sondern auch für Wohnhäuser.
Die Dachbegrünung der neueren Zeit geht davon aus, daß das Dach auf der Dachtragekonstruktion zunächst mit einer Dachabdichtung, ggfs. auch mit einer zusätzlichen Schicht gegen eine Durchwurzelung geschützt wird, anschließend Erdreich aufgebracht und eingegrünt wird. Dabei sind verschiedene Hilfsmittel bekannt.

Ein Hilfsmittel hat die Form von Krallmatten, welche das Erdreich und/oder den Samen beinhalten, auf dem Dach ausgerollt werden. Krallmatten bestehen aus schlingenförmig oder in ähnlicher Form gelegten Kunststoff-Fäden, die ganz oder teilweise an den Berührungsstellen miteinander verschweißt sind. Das Erdreich und der Samen werden in die Krallmatte eingerüttelt. Eine besondere Bedeutung haben die Krallmatten jedoch nicht erlangt. Das wird darauf zurückgeführt, daß das eingerüttelte Erdreich aus den Krallmatten wieder herausfällt.

Ein anderes Hilfsmittel wird durch Kunststoffbahnen gebildet, in die Vertiefungen eingeformt sind. Diese Kunststoffbahnen werden auf dem Dach ausgerollt, um mit den Vertiefungen das Erdreich aufzunehmen.

In jedem Fall findet ein schichtweiser Aufbau der Begrünung statt. Die Arbeit ist aufwendig. Dementsprechend hoch ist der Preis für die Begrünung. Im Vergleich zu einer herkömmlichen Dachabdichtung/Dachdeckung ist die Begrünung sehr viel teuerer, so daß die Begrünung häufig an den Kosten scheitert.
Der Erfindung liegt die Aufgabe zugrunde, die Begrünung preiswerter zu gestalten. Dabei geht die Erfindung von der Überlegung aus, daß der schichtenweise Aufbau ein erhebliches Rationalisierungspotential beinhaltet. Nach der Erfindung wird dadurch eine erhebliche Vereinfachung erreicht, daß eine Wachstumsmatte mit einer von der Begrünung durchdringbaren Deckschicht, einer Tragschicht und einer Wachstumszwischenschicht verwendet wird, wobei die Deckschicht mit der Tragschicht verbunden ist. Durch die Verbindung der Schichten ist die Wachstumsschicht zwischen den Schichten eingeschlossen und wird verhindert, daß die Wachstumsschicht herausfällt. Die erfindungsgemäße Schicht kann deshalb hervorragend transportiert und verlegt werden.
Die erfindungsgemäße Schicht erlaubt auch eine Vorgrünung. Die Vorgrünung hat den Vorteil, daß unter kontrollierten Bedingungen eine Begründung in Gang gebracht werden kann und/oder fertig gestellt werden kann. Wachstumsfehler und Wachstumsschwierigkeiten können vor der Verlegung auf dem Dach ausgemerzt bzw. überwunden werden. Auf dem Dach ist zwar auch eine Kontrolle und eine Mängelbeseitigung möglich. Der Aufwand ist jedoch ungleich größer. Das beginnt bereits bei der Kontrolle. Die Kontrolle erfordert einen mehr oder weniger großen Anfahrtweg mit einem unvermeidbaren Zeitverlust.

Vorzugsweise ist als Deckschicht ein Vlies vorgesehen. Das Vlies ist gegenüber einem Gewebe so geschlossen, daß es an sich als Deckschicht für eine Wachstumsmatte ungeeignet erscheint. Tatsächlich verzögert sich das Wachstum bei Verwendung eines Vlieses als Deckschicht ganz erheblich. Jedoch stellt sich eine ganz überraschende Folge ein, denn nach einiger Zeit bildet sich eine wesentlich stärkere und widerstandsfähigere Wurzelschicht. Diese Wurzelschicht bewirkt nach der Durchdringung der Deckschicht eine außerordentliche Wachstumsbeschleunigung.

Eine wesentliche Wirkung kann in diesem Sinne mit Vliese herbeigeführt werden, deren Flächengewicht 3O bis 3OO g pro Quadratmeter beträgt. Das Flächengewicht kennzeichnet die Vliesdicke.
Nach unten ist die Vliesdicke durch die notwendige Festigkeit beschränkt, nach oben durch den Widerstand, den das Vlies dem Durchwachsen entgegensetzt.

Vorzugsweise sind die Deckschicht und die Trägerschicht vollflächig miteinander verbunden. Als Verbindung zwischen der Deckschicht und der Trägerschicht eignet sich eine Vernadelung oder ein Vernähen. Die Vernadelung und das Vernähen setzen bestimmte Werkstoffeigenschaften voraus.
Beim Vernadeln werden Fäden bzw. Fasern aus einer Schicht in die andere gezogen. Das heißt, beim Vernadeln muß entweder die Deckschicht oder die Trägerschicht ein entsprechendes Material besitzen. In der Regel sind Textilien vernadelbar. Das gilt besonders für Vliese.
Beim Vernähen werden die miteinander zu verbindenden Schichten mit einem Fremdfaden verbunden. Hier können auch ausschließlich nicht vernadelungsfähige Materialien für die Deckschicht und die Trägerschicht verwendet werden.

Darüber hinaus können die Deckschicht und die Trägerschicht durch Verschweißung miteinander verbunden sein. Das kann mittelbar oder unmittelbar erfolgen. Die mittelbare Verbindung ist durch Verwendung einer zwischenliegenden Schlingenmatte oder dergleichen möglich. Es ist von Vorteil, die Schlingenmatte zunächst mit der Trägerschicht zu verbinden, dann das Wachstumsmaterial einzurütteln und zwar so, daß zumindest einige Schlingen oben aus dem Wachstumsmaterial herausragen. Danach kann die Deckschicht mit der Schlingenmatte sicher und schnell verschweißt werden.
Ähnliche Ergebnisse wie durch Einrütteln lassen sich auch durch Einblasen erreichen. Beim Einblasen werden die Partikel der Wachtstumsschicht vorzugsweise aus einem Vortatsbehälter/Silo mittels Schleuse und Druckluft abgezogen und gegen die Matte geschleudert, welche die Partikel aus der Luft herausfiltert.

Wahlweise sind Schlingen auch an der Trägerschicht als separate Fasern und/oder Fäden befestigt. Die separaten Fasern oder Fäden erfüllen die gleiche Aufgabe wie die separate Schlingenmatte. Mit Hilfe der Fasern oder Fäden kann der Aufwand zum Verbinden der Schichten reduziert werden.
Wahlweise sind die Fasern und/oder Fäden insgesamt oder teilweise zu Schlingen aus der Trägerschicht herausgezogen. Im letzteren Fall sind die Schlingen einteilig mit der Trägerschicht.

Das Verschweißen erfolgt vorzugsweise mit Heißluft. Mit Hilfe der Heißluft werden die Schweißflächen angeschmolzen. Anschließend werden die Schweißflächen mit dem zur Verschweißung erforderlichen Druck aneinandergedrückt.
Im Rahmen der Erfindung liegt auch eine Reduzierung der Heißlufttemperatur, so daß das anschließende Zusammendrücken der Schichten zu einer relativ schwachen Schweißung und im Extremfall nur zu einem Kleben der Schichten führt.

Die Wachstumszwischenschicht besteht vorzugsweise aus einer Mischung von Pflanzensamen, einer Nährstoffkonzentration und einem Wasserspeichermaterial. Das Wasserspeichermaterial kann Blähton oder dergleichen sein. Ein geeignetes Wasserspeichermaterial ist auch Ziegelsplitt. Ziegelsplitt entsteht durch Mahlen von Ziegeln bzw. Ziegelsteinen.
Wahlweise können auch Pflänzlinge und/oder Ableger und/oder kleingeschnittes bzw. gehäckseltes Pflanzenmaterial Bestandteil der Wachstumsschicht sein. Das ist vor allem für Pflanzen von Vorteil, welche sehr langsam und schwach aus Samen keimen. Solche Gewächse sind z.B. Sedumgewächse, auch als Trockenpflanzen bekannt. Derartige Pflanzen sind besonders für eine Dachbegrünung geeignet, weil sie sehr widerstandsfähig gegen Trockenheit sind.
Bei der Verwendung der Plänzlinge, Aberleger und geschnittenen oder gehäckselten Pflanzenmaterial ist nach der Erfindung eine baldmögliche Befeuchtung und Belichtung vorgesehen, um das Wachstum zu starten, bevor ein Trocknungsschaden einsetzt.
Bei der Verwendung von Samen können die erfindungsgemäßen Wachstumsmatten gefahrlos lange vor Ihrem Einsatz ohne Befeuchtung und Belichtung gelagert werden.

Vorzugsweise wird die Wachstumsmatte mit einer Kunststoffschaumschicht kombiniert. Die Kunststoffschaumschicht besteht aus Platten, die aneinander gesetzt werden. Die Erfindung erlaubt es, die einzelnen Platten einzeln mit Matten zu versehen, so daß Begrünungselemente entstehen. Diese Begrünungselemente eröffnen eine Viele von Handhabungsvorteilen, zu denen unter anderem eine ganz einfache Verlegung und eine extreme Reparaturfreundlichkeit und bislang nicht gegebene Gestaltungsmöglichkeiten gehören.
Vorteilhalterweise lassen sich die Platten stapelweise mit den bei Dachdeckern üblichen Hubaufzügen oder dergleichen auf das Dach transportierten oder auch auf das Dach tragen. Die Begrünungselemente können ein handhabungsfreundliches Format von z.B. 5OO x 5OO mm oder auch 5OO x 6OO mm besitzen. Vorzugsweise wird als Breite die maximale Fertigungsbreite von Kunststoffschaumplatten ausgenutzt. Diese Breite liegt bei vielen Anlagen bei 6OO mm. Wenn die Fertigungbreite nicht durch Auswechselung von Extrusionsdüsen beeinflußt werden kann, müßte eine geringere Fertigungsbreite durch Konfektionierung der hergestellten Platten erzeugt werden. Dadurch wurde in erheblichem Maße Abfall der zwar wieder recycelt werden kann, aber doch mit einem entsprechenden Aufwand verbunden ist.
Die Plattenlänge ist bei kontinuierlich hergestelltem Plattenstrang beliebig. Solche Plattenstränge entstehen beim Extrudieren von Kunststoffschaumplatten. Der Strang läßt sich auf jede gewünschte Länge ablängen. Es ist ohne weiteres möglich, den Strang mit bisher vorkommenden maximalen Plattenlängen bis 2,6 m oder mehr oder auch mit einer Länge abzulängen, die kleiner als die Strangbreite ist. Dann bestimmt die Strangbreite die Plattenlänge und der Abstand der Teilungsschnitte am Strang die Plattenbreite.

Nach ihrer Verlegung können die Begrünungselemente bei Wachstumsstörungen einzeln aufgenommen und ersetzt werden. Der Arbeitsaufwand ist gegenüber einem Reparaturaufwand an herkömmlich hergestellten Begrünungsflächen fast vernachlässigbar gering.
Die Platten lassen sich auch unterschiedlich und mit unterschiedlichem Bewuchs zusammensetzen. Das heißt, es kann z.B. Gras mit Sedumgewächsen kombiniert werden. Es können z.B. unterschiedlich farbige Begrünungselemente kombiniert werden. Unter den Begriff der Begrünung fallen nach der Erfindung alle für das Dach in Betracht kommenden Pflanzen Sedumpflanzen kommen in diversen Rotschattierungen vor. Wahlweise wird die erfindungsgemäße Kombinationsmöglichkeit genutzt, um z.B. eine schachbrettartige Musterung zu erzeugen oder um in einer begrünten Fläche ein Logo unterzubringen.

Durch die Kunststoffschaumplatten kann je nach Material ein zusätzlicher Durchwurzelungsschutz entbehrlich werden.

Vorteilhafterweise eröffnen sich mit der erfindungsgemäßen Verbindung der Wachstumsmatte mit den Kunststoffschaumplatten zwei wichtige Anwendungsbereiche:

Im einen Fall wird aus den extrem leichten Kunststoffschaumplatten und den Wachstumsmatten ein extrem leichtes Begrünungselement erzeugt, das auf einem sogenannten Leichtdach verlegt werden kann. Das Leichtdach hat eine große Verbreitung bei industriellen Hallenbauten. Üblicherweise haben Leichtdächer eine leichte Neigung. Die leichte Neigung dient dem Wasserablauf. Sie bestimmt jedoch nicht den Namen. Der Name rusultiert vielmehr daraus, das das Leichtdach eine Dachtragekonstruktion mit geringer Tragkraft besitzt. Darauf kann naturgemäß nur ein sehr leichtes Dach verlegt werden. Dazu eignen sich z.B.
Wellenplatten aus Faserzement oder dergleichen oder aus Metall. Bevorzugt wird Aluminium eingesetzt. Zunehmend kommen jedoch auch Wellenplatten aus beschichtetem Stahlblech auf Die Platten altern wie andere Materialien. Dadurch verlieren die Platten ihr vorteilhaftes Aussehen und einen Teil ihrer Festigkeit.

Eine andere Form des Leichtdaches wird durch Stahlblechprofile gebildet, die auf der Dachtragekonstruktion verlegt und z.B. zunächst mit einer Dampfsperre, dann mit einer Wärmedämmung und zuletzt mit einer Dachabdichtungslage überdeckt werden.

Mit den erfindungsgemäßen Begrünungselementen kann das gealterte Leichtdach verschönert und verbessert werden. Durch Auflegen der extrem leichten Begrünungselemente wird dem Industriedach die von vielen Gemeinden gewünschte Begrünung gegeben. Zugleich wird das Oberflächenwasser von der Abdichtung des gealterten Leichtdachs weg gehalten. Allenfalls ist mit einer geringen Wassermenge zu rechnen, die bei mangelnder Fugenkonstruktion zwischen den Begrünungselementen durchdringt.
Ein ganz besonderer Vorteil der erfindungsgemäßen Begrünungselemente ist die von den Kunststoffschaumplatten ausgehende Wärmedämmung. Die erfindungsgemäßen Begrünungselemente wirken wärmetechnisch als Umkehrdach. Das Umkehrdach ist bei Flachdächern mit Kunststoffabdichtungen über einer Wärmedämmung bekannt Dort wird bei mangelnder Wärmedämmung auf die bisherige Dachabdichtung eine zusätzliche Wärmedämmschicht aufgebracht. Die zusätzliche Wärmedämmschicht bewirkt nicht nur die gewünschte Wärmedämmung sondern auch eine vorteilhafte Entlastung der Kunststoffabdichtung. Die zusätzliche Wärmedämmung schützt nämlich vor der UV-Einstrahlung, die bei Kunststoff eine Versprödung und Rißbildung verursacht. Ferner wird die Temperaturbelastung der Abdichtung ganz erheblich reduziert. An bekannten Flachdächern sind im Sommer Temperaturen bis 1OO Grad Celsius und im Winter bis minus 2O Grad Celsius nicht ungewöhnlich sind. Dadurch werden extreme Spannungen und Verwerfungen verursacht. Am Dachrand und an Dachdurchdringen wie Lichtkuppeln und Lüftern besteht eine extreme Schadensgefahr.

Durch die zusätzliche Wärmedämmschicht wird die Kunststoffabdichtung nur noch mit einem Bruchteil der genannten Temperaturen belastet.

Die für Umkehrdächer verwendeten Dämmungen sind üblicherweise Kunststoffschäume, die zwar die Abdichtung schützen, aber an ihrer Oberfläche wie die Abdichtung unter der UV-Einstrahlung und dem Temperatureinfluß leiden. Durch die Anwendung einer zusätzlichen Wärmedämmschicht mit Hilfe der erfindungsgemäßen Begrünungselemente sind die Kunststoffschaumplatten durch die Wachstumsmatte und den Bewuchs vor dem Licht und dem Temperaturwechsel geschützt.

Auf Leichtdächern mit Wellplatten ist das Umkehrdach bislang unbekannt. Das ist darauf zurückzuführen, daß unter den Platten, also in der Vertiefung zwischen dem Wellentiefsten und Wellenhöchsten mit einer Luftbewegung gerechnet werden muß.
Überraschenderweise zeigt sich mit der Anwendung der erfindungsgemäßen Begrünungselemente gleichwohl eine erhebliche Dämmwirkung. Das gilt besonders dann, wenn z.B. die Öffnungen am First geschlossen werden. Dort wird die erwärmte Luft durch die am First aneinandergestoßenen Begrünungselemente am Ausströmen gehindert. Die Begrünungselemente wirken wie eine Kappe. Zusätzlich kann mit Hilfe einer Abdichtung im Firstbereich und/oder der Fugen die Isolierung verbessert werden. Als Abdichtung eignet sich z.B. ein Montageschaum, der im Firstbereich den Hohlraum zwischen Wellentiefstem und Wellenhöchstem ausfüllt. Die Abdichtung kann auch mit anderen Mitteln z.B. einem Weichschaum bewirkt werden, der anders als der Montageschaum keine Verfestigung erfährt.

Am unteren Dachrand sollten die aus den Wellen resultierenden Öffnungen nicht ganz geschlossen werden, um durch die Begrünungselmente durchtretendes Wasser ableiten zu können. Dafür reichen ganz kleine Öffnungen. D.h. die Öffnungen können weitgehend verschlossen werden, z. .B. durch ein Lochblech.

Aufdem Leichtdach müssen die Begrünungselemente wie auf jedem anderen Dach gegen die angreifende Windlast gesichert werden. Das geschieht wahlweise mit Hilfe von Verbindungselementen oder mit Hilfe einer Verklebung.

Zur Verklebung eignet sich z.B. ein Bitumenkleber oder ein Polyurethanschaum als Kleber. Polyurethanschaum ist als Montageschaum bekannt. Demzufolge eignen sich auch andere Montageschäume als Kleber. Der Kleber wird auf das Wellenhöchste aufgebracht.
Anschließend werden die Begrünungselemente aufgebracht.
Auf den oben erwähnten Flächdächern mit Kunststoffabdichtung kann der Kleber vollflächig oder auch nur punktuelle und/oder in Bögen und/oder Linien aufgebracht werden.

Die Verbindungsgelemente finden - soweit sie auf eine Durchdringung der Abdichtung angelegt sind - nur an den Wellplatten Anwendung. Dort greifen die Verbindungselemente als Schrauben, Nägel oder Anker durch das Wellenhöchste hindurch, um in der Dachtragekontruktion und/oder in der Wärmedännnung und/oder unter den Wellplatten Halt zu finden. Im Wellenhöchsten ist die Durchdringung der Wellplatten unschädlich. Dort ist die Anbringung von Verbindungselementen erprobt. Das Oberflächenwasser fließt beiderseits des Wellenhöchsten ab und belastet die Verbindungselemente nicht. Soweit gleichwohl noch eine Abdichtung gewünscht wird, wird zwischen den Kopf der Verbindungselemente und die Wellplatte ein Dichtungsring plaziert.

Vorteilhafterweise sind die erfindungsgemäßen Begrünungselemente sehr leicht. Bei einer wärmetechnisch bereits hoch wirksamen Kunststoffschaumplattendicke von 5O bis 6O mm ergibt sich je nach Schaumqualität ein Schaumplattengewicht von 1 bis 3 kg pro Quadratmeter. Die Wachstumsmatte verursacht je nach Ausführung eine zusätzliche Gewichtsbeslastung von 1 bis 2 kg pro Quadratmeter. Die davon ausgehende Gewichtsbelastung des Daches wird vorteilhafterweise durch die mit den erfindungsgemäßen Begrünungsplatten verbundene Versteifung des Daches stark überkompensiert. Das gilt vor allem für größere Kunststoffschaumplattenlängen. In diesem Sinne ist es günstig, wenn die Plattenlänge jeweils so gewählt ist, daß immer oder wenigstens meistens zwei Auflagen der Dachtragekonstruktion überbrückt werden. Auflagen können Dachlatten oder dergleichen sein.
Die Wachstumsmatten lassen sich jeder Kunststoffschaumplattenlänge ohne weiteres anpassen. Unter obigen Gesichtspunkten eignen sich die erfindungsgemäßen Begrünungselemente besonders zur Dachsanierung.

Die bevorzugte Montagelage der erfindungsgemäßen Begrünungselemente verläuft in Richtung der Dachneigung. Es ist aber auch möglich, die Begrünungselemente quer dazu zu verlegen.

Im anderen Fall der Anwendung erfindungsgemäßer Begrünungselemente ist keine Verbindung zwischen den Begrünungselementen und dem Dach vorgesehen. Die Begrünungselemente werden lediglich lose aufgelegt. In diesem Anwendungsfall findet eine Sicherung gegen die Windlast durch Beschwerung der Begrünungselemente statt. Als Beschwerung eignen sich Gewichte zwischen der Wachstumsschicht und der Kunststoffschaumplatte. Die Gewichte können in der Form von Kies aufgebracht werden. Kies bildet die übliche Sicherung an Dächern, wenn keine Dachbefestiger vorgesehen welche die Dachabdichtung durchdringen. Der Kies gibt nur anfangs auf dem Flachdach ein schönes Bild. Schon bald verschmutzt der Kies. Viel schlimmer ist, daß der Kies sich im Sommer in die dann unter der Sommerwärme relativ weiche Dachabdichtung eindrückt. Das gilt besonders bei einer Belastung der Dachabdichtung durch Begehen.
Der eingedruckte Kies schwächt die Dachabdichtung gravierend.

Unter der Begrünung und über der Kunststoffschaumplatte gehen von dem Kies solche Gefahren nicht aus.

Anstelle von Kies ist nach der Erfindung wahlweise Ziegelsplitt als Beschwerung vorgesehen. Der Ziegelsplitt wirkt zugleich als Wasserspeicher. Günstig sind dabei zugleich geringe Anteile von Humus,ggfs auch Dünger und dergleichen in dem Ziegelsplitt. Die Wurzeln finden dann nicht nur zusätzlich Wasser sondern auch Nahrung in der Beschwerungsschicht.

Das Beschwerungsmaterial kann unmittelbar auf der Kunststoffschaumplatte aufliegen und durch die Wachstumsmatte in der Position gehalten werden.
Wahlweise wird das Beschwerungsmaterial in einem separaten Schlauch oder Sack gehalten. Es kann darüber hinaus von Vorteil sein, wenn der Sack oder Schlauch gekammert ist. Damit kann eine Verschiebung des Beschwerungsmaterials innerhalb des Sackes oder Schlauches verhindert und eine gleichbleibende Lage des Beschwerungsmaterials gesichert werden. Das Kammern kann mit Hilfe geeigneter Stege in dem Sack erreicht werden. Die Stege können bei der Herstellung mit eingearbeitet werden.
Günstig ist es auch, mehrere nebeneinander liegende Schläuche zu bilden. Das kann z.B. dadurch geschehen, daß zwei übereinander liegende Materialbahnen miteinander verbunden werden, wobei die untere Bahn Schlaufen bildet und die obere Bahn eben auf das Schlaufenwerk gelegt und mit diesem verbunden wird. Die Schlaufen können mit geeigneten Stangen, Rechen oder Zähnen gebildet werden, so daß die Materialbahn zwischen den Stangen oder Zähnen zu Schlaufen durchhängt und sich die obere Bahn leicht auflegen läßt.

Die nebeneinander liegenden Schläuche werden gefüllt und gewährleisten eine gleichbleibende und einheitliche Lage des Gewichtsmaterials.

Vorzugsweise werden die erfindungsgemäßen Schläuche und Säcke aus einem Vlies gebildet. Das Vlies ist leicht zu verarbeiten. Es zeigt eine ausreichende Festigkeit und erlaubt einen guten Feuchtigkeitsaustritt in die Wachstumsschicht bzw. eine gute Verwurzelung in die Beschwerungsschicht.

Die erfindungsgemäßen Säcke und Schläuche lassen sich aus geeigneten Vlieszuschnitten durch Vernadeln, Vernähen oder Schweißen sowie durch Kleben herstellen. Das gilt für einfache und gekammerte Formen und für nebeneinander liegende Schläuche.

Die Befestigung der Wachstumsschicht erfolgt vorzugsweise unter Verwendung eines Zuschnittes, der an den Rändern um ein gewisses Maß gegenüber der darunter liegenden Kunststoffschaumplatte vorragt. Der überstehende Rand kann an dem Plattenrand befestigt werden. Als Befestigung eignet sich eine Klebeverbindung, eine Schweißverbindung oder auch eine rein mechanische Verbindung oder kombinierte Verbindungen.

Die Schweißverbindung setzt voraus, daß die Schweißflächen aus verschweißbaren Materialien bestehen. Im einfachsten Fall wird das mit gleichem Material, z.B. gleichem Kunststoff erreicht. Es ist aber auch eine Verschweißung unterschiedlicher Kunststoffe wenn die Materialien noch in einem ausreichenden verschweißbaren Bestandteil übereinstimmen.

Das Verkleben kann mit Hilfe eines Heißklebers erfolgen. Auch andere Kleber sind geeignet. Vorteilhaft sind auch Selbstklebebänder, z.B. Bitumenbänder mit Dicken von O,5 mm und mehr. Derartige Bitumenbänder betten alle an den Verbindungsflächen unerwünschten Partikel ein, so daß diese Partikel nicht stören.

Eine rein mechanische Verbindung entsteht z.B. mit Hilfe einer Schnur oder Bandes. Band und Schnur werden um den Plattenrand herumgebunden und klemmen den überstehenden Rand der Wachstumsmatte gegen den Plattenrand. Das kann durch eine Nut am Plattenrand begünstigt werden, in welche der überstehende Rand der Wachstumsmatte gezogen bzw. gedrückt wird. Bei der Befestigung mit Schnur und Band werden die Bandenden miteinander verknotet oder durch einen Verschluß mit einander vebunden. Mit Hilfe des Verschlusses können die Bandenden gegeneinander gedrückt und dadurch geklemmt und/oder miteinander verzahnt werden. Die Befestigung mit den Bändern kann auch die Form einer Umreifung haben. Dabei werden z.B. relativ feste Bänder am Ende mit dem Verschluß gehalten.

Die vorstehend beschriebene Befestigungsmöglichkeit eignet sich sowohl für Begrünungselemente für Leichtdächer als auch für Begrünungselemente mit Beschwerungsschicht und für die unterschiedlichsten Längen und Breiten. Die Beschwerungssicht wird dann einfach auf die Kunststoffschaumplatte gelegt und das ganze mit der Wachstumsschicht überdeckt und an den Enden gehalten.

Die Kunststoffschaumplatten können einen genau geraden oder einen profilierten Rand besitzen. Mit Hilfe der Profilierung kann eine gewisse Verzahnung der verlegten Platten miteinander verursacht werden. In diesem Sinne entstehen besonders starke Verbindungen bei Verwendung von Platten mit Nut und Feder, so daß die eine Platte mit einer Feder in eine Nut der anderen Platte greift. Vorzugsweise sind zwei aneinander stoßende Plattenränder mit eine Nut und die beiden gegenüber liegenden Plattenränder mit einer Feder versehen.
Anstelle der Nut/Federverbindung kann ebenso ein Stufenfalz am Plattenrand Anwendung finden. Der Stufenfalz besitzt einen oberen oder unteren Vorsprung. Mit diesem Vorsprung überlappt sich die Platten an den Stoßstellen. An zwei aneinander stoßenden Plattenrändern befindet sich der Vorsprung unten und an den gegenüber liegenden Plattenrändern oben. Der Stufenfalz wird wie Nut und Feder in den Plattenrand gefräst.
Der Stufenfalz könnte aber auch dadurch entstehen, daß zwei in den äußeren Abmessungen gleich breite und gleich lange, aber entsprechend dünne Platten übereinander gelegt und exzentrisch miteinander verklebt oder verschweißt werden.
Bei Platten mit Nut/Federverbindung ist diese Form der Herstellung mit drei gleich langen und gleich breiten, aber entsprechend dünnen Platten durchführbar. Dann wird die oberste und die unterste Platte genau zentrisch und die mittlere Platte exzentrisch positioniert.

Wahlweise werden auch Platten mit einem einheitlich am Plattenrand umlaufenden Stufenfalz verwendet. Der einheitliche Stufenfalz kann wieder gefräst werden, aber auch aus zwei übereinander gelegten Platten hergestellt werden. Von den beiden Platten ist eine dann breiter und länger. Aus diesem System ergeben sich im Unterschied zu den vorher erläuterten Platten zwei unterschiedliche Begrünungselemente für das gleiche Dach. Bei dem einen Begrünungselement liegt die Platte immer mit der Fläche nach oben, welche den vorstehenden Rand besitzt. Dementsprechend ist die Wachstumsmatte bei dem einen Begrünungselement an dem vorstehenden Plattenrand befestigt.
Bei dem anderen Begrünungselement liegt die Platte immer mit der Fläche nach oben, welche den zurückspringenden Plattenrand besitzt. Dementsprechend ist die Wachstumsmatte an dem zurückspringenden Plattenrand befestigt.
Derartige Platten lassen sich zur Auswechselung des Bewuches besonders leicht aufnehmen.

Die erfindungsgemäßen Wachstumsmatten besitzen vorzugsweise eine Dicke von 1 bis 15 mm. Dieses Maß kann am Plattenrund unberücksichtigt bleiben, so daß die Platten zwar in der Vertikalen mit den Wachstumsmatten aneinander stoßen, aber sonst ein Spalt entsteht. Im Sinne der erläuterten Isolierung ist es besser, den vertikalen Spalt zu schließen. Das geschieht dadurch, daß der Plattenrand verkürzt wird, bis der Spalt wieder geschlossen ist. Dazu wird der Plattenrand um das Dickenmaß der Wachstumsmatte abgefräst oder werden entsprechend schmalere und kürzere Platten bei der Plattenherstellung durch Zusammenfügen von Einzelplatten verwendet.

Sofern am Dachrand eine Attika vorgesehen ist, wird bei der Verlegung der erfindungsgemäßen Begrünungselemente von der Attika wahlweise ein Dehnungsabstand eingehalten, um die Einwirkung von Schubkräften auf die Attika zu verhindern.

Vorteilhafterweise eignen sich die erfindungsgemäßen Begrünungselemente nicht nur für Flachdächer bzw. flach geneigte Dächer sondern auch für Schrägdächer, also Dächer mit stärkerer Neigung. Das gilt besonders für Begrünungselemente, die am Dach befestigt werden. Vorsorglich können die Verbindungselemente dabei mit schwächerer Neigung als das Dach schräg zur Dachfläche eingebracht werden. Dadurch werden die Verbindungslemente weniger auf Biegung belastet. Außerdem kann am unteren Dachende noch ein Balken angebracht werden, der die Begrünungsfläche abstützt.

In der Zeichnung sind verschiedene Ausführungsbeispiele der Erfindung dargestellt:

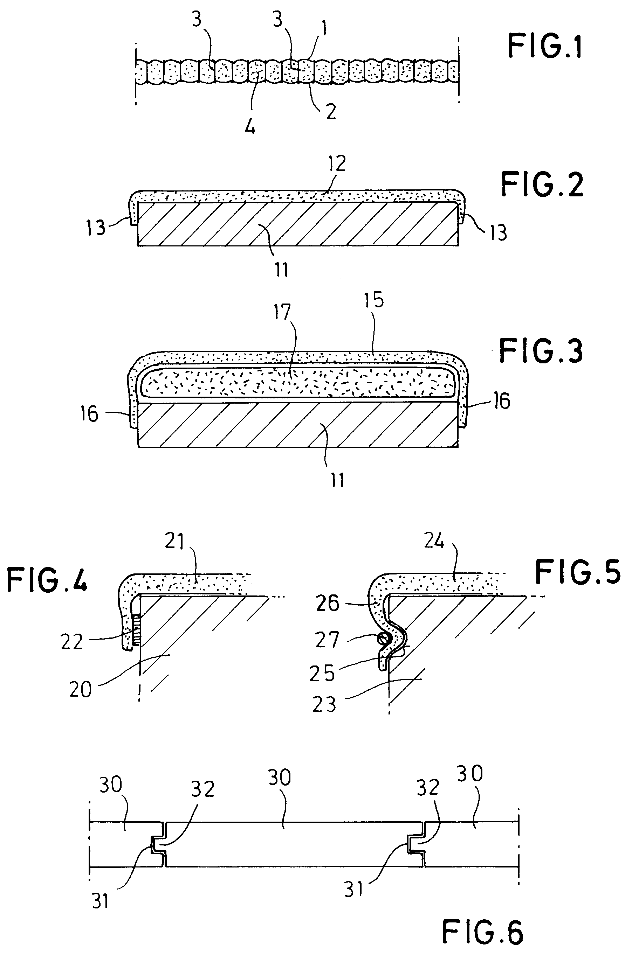

Nach Fig. 1 besteht eine erfindungsgemäße Wachstumsmatte aus zwei Vliesschichten 1 und 2 mit einem Flächengewicht von jeweils 1OO g pro Quadratmeter. Beide Vliese sind Kunststoff-Faservliese. Zwischen den Vliesschichten 1 und 2 ist eine Wachstumsschicht 4 aus 5 Gew% Samen, 2Ogew% Nährstoffen und im übrigen aus Blähton vorgesehen. Die Wachstumsschicht 4 hat insgesamt eine Dicke von 2 mm. Die Vliessichten 1 und 2 sind miteinander und mit der Wachstumsschicht 4 vollflächig vernadelt. Dabei werden Fäden 3 aus der Vliesschicht 1 durch die Wachstumsschicht 4 hindurch in die Vliesschicht 2 gezogen.

Fig. 2 zeigt eine Wachstumsmatte 12, die aufeiner Kunststoffschaumplatte 11 aufliegt und mit ihren Rändern 13 um den Plattenrand herumgeführt und dort befestigt ist. Im Ausführungsbeispiel ist die Wachstumsmatte 12 vor der Montage auf der Platte 11 kontrolliert bewässert und belichtet worden, so daß die Wachstumsmatte bereits einen Bewuchs entwickelt hat. Die Wachstumsmatten sind vorbegrünt worden. Im Sommer kann die Vorbegrünung auch draußen erfolgen bzw. die Wachstumsförderung auf die Bewässerung beschränken. In einem anderen Ausführungsbeispiel erfolgt die Begrünung in montiertem Zustand der Matten.
Die fertigen Begrünungselemente können auf einem Dach mit Befestigung verlegt werden. Als Befestigung ist in einem Ausführungsbeispiel ein Verkleben mit Bitumenkleber vorgesehen. Der Bitumenkleber wird zunächst auf das Dach gestrichen. Anschließend wird das Begrünungselement angedrückt.

Fig. 3 zeigt ein anderes Begrünungselement mit einem Beschwerungssack 17 zwischen der Kunststoffschaumplatte 11 und der Wachstumsmatte 15. Die Ränder 16 der Wachstumsmatte 15 sind etwas länger als im vorhergehenden Ausführungsbeispiel, um in gleicher Weise an den Plattenrändern befestigt werden zu können.
Der Beschwerungssack besteht aus dem gleichen Material wie die Vliese 1 und 2 und besitzt eine Füllung aus Ziegelsplitt. Ziegelsplitt fällt als Abfallprodukt an und hat über sein Gewicht hinaus den Vorteil, daß er Wasser speichert bzw. im Falle der Trockenheit an die Wachstumsschicht abgibt. Vorteilhafterweise können die Wurzeln bis in die Ziegelsplitt-Füllung greifen. Unterhalb des Beschwerungssackes werden die Wurzeln durch die Kunststoffschaumplatte an weiterem Wachstum gegen das Dach gehindert.
Die dargestellten Begrünungselmente können ohne weiteres aufeinem Flachdach ohne Befestigung verlegt werden. Der Beschwerungssack 17 bildet einen ausreichenden Widerstand gegen angreifende Windlasten.
Je nach Bauhöhe kann der Beschwerungssack den dann herrschenden Windlasten angepaßt werden.
Die Begrünungselemente bilden mit den Kunststoffschaumplatten 11 auf dem Flachdach eine zusätzliche Dämmlage nach Art eines Umkehrdaches. Zu der Dämmung trägt auch der Bewuchs bei. Ferner werden die Kunststoffschaumplatten durch den Bewuchs geschützt.

Der Zuschnitt der Wachstumsmatte 15 zeigt an den Ecken rechteckige Einschnitte, die verhinder, daß dort eine störende Faltung gebildet wird.

Nach Fig. 4 erfolgt die Befestigung von Rändern 22 der Wachstumsmatte 21 mit Hilfe eines Bitumenklebestreifens. Der Klehestreifen ist als Selbstklebeband ausgebildet und läßt sich leicht auf den Plattenrand aufdrücken. In anderen Ausführungsbeispielen wird der Klebestreifen aufgespritzt.
Am Bitumenklebestreifen haftet der Rand der Wachstumsmatte 21 sicher.

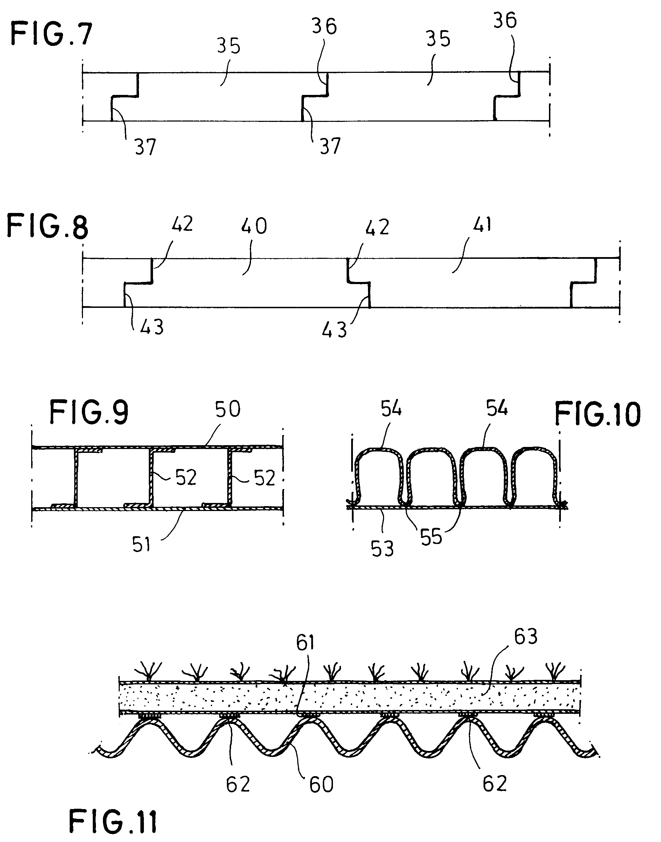

Fig. 5 zeigt eine Befestigung des Randes 26 einer Wachstumsmatte 24 an einer Kunststoffschaumplatte 23 mit Hilfe einer Schnur 27. Vorteilhafterweise ist in den Plattenrand eine Nut 25 eingearbeitet worden. Dadurch kann der Mattenrand 26 in die Nut gedrückt werden und entsteht eine zusätzliche Klemmwirkung.

Fig. 6 zeigt Kunststoffschaumplatten 3O für Begrünungselemente, die mit Nut und Feder ineinander greifen. Jede Platte 3O besitzt zwei aneinander stoßende Ränder mit einer Nut 31 und an den gegenüberliegenden Rändern eine Feder 31.

Fig. 7 zeigt Kunststoffschaumplatten 35 für Begrünungselemente, die am Rand mit einem Stufenfalz ineinander greifen. In der Ansicht überlappen die Platten 35 jeweils mit einem rechten oberen Rand einen linken unteren Rand der benachbarten Platte 35. Das gilt für eine Seitenansicht von rechts.

Fig. 8 zeigt ein anderes Ausführungsbeispiel mit Kunststoffschaumplatten 4O und 41 für Begrünungselemente. Beide Platten sind mit einem Stufenfalz versehen. Im Unterschied zu dem Ausführungsbeispiel nach Fig. 7 ragen alle Ränder 42 der Platte 41 oben umlaufend vor, während alle Ränder 43 der Platte 4O unten umlaufend vorragen. Die Überlappung erfolgt aber in der gleichen Weise wie nach Fig. 7, d.h. oben vorragende Ränder 42 überlappen unten vorragende Ränder 43.
Bei dieser Ausbildung kann die Platte 41 bzw. das zugehörige Begrünungselement ganz leicht nach oben aus einer fertig gestellten Begrünungsfläche herausgenommen werden, um z.B. ausgewechselt zu werden, wenn der Bewuchs verkümmert. Das gilt für Begrünungselemente mit einer Beschwerung wie sie in Fig. 3 gezeigt ist. Bei befestigten Begrünungselementen muß erste die Befestigung gelöst werden.

Die Platten nach den Fig. 6 bis 8 können für jeden Anwendungsfall Verwendung finden, also auch für die Begrünungselemente nach den Fig. 1 bis 5.

Fig. 9 zeigt einen Beschwerungssack für ein Begrünungselement in einer Detailansicht. Der Beschwerungssack besteht aus einer oberen Vliesschicht 5O und einer unteren Vliesschicht 51, zwischen denen Vliesstege 52 angeordnet sind. Die Vliesstege sind in Z-Form eingebaut. Das ist fertigungstechnisch günstig und gilt für jede Art der Verbindung zwischen den Stegen 52 und den Vliesschichten 5O und 51.
Die Stege 52 bewirken eine Kammerung des Beschwerungssackes. Infolgedessen kann das Beschwerungsmaterial bei entsprechender Kammerfüllung keine unerwünschte Lageänderung einnehmen, wenn das Begrünungselement beim Transport oder bei der Verlegung geneigt wird.

Fig. 1O zeigt eine andere Kammerung des Beschwerungssackes. Ausgangsmaterialien bilden wieder zwei Vliesschichten 53 und 54. Die obere Vliesschicht 54 ist jedoch in Schlaufen verlegt worden, die unten mit der unteren Vliesschicht bei 55 verbunden worden sind. Die Verbindung kann beliebiger Art sein, z.B. durch Vernähen, Nadeln, Kleben oder Schweißen gebildet werden. Durch die Schlaufen entstehen nebeneinander angeordnete und durch die untere Vliesschicht miteinander verbundene Schläuche. Die Schläuche erfüllen die gleiche Aufgabe wie die Kammern nach Fig. 9.

Fig. 11 zeigt die Anwendung erfindungsgemäßer Begrünungselemente 63 auf ein leicht geneigtes Industriedach mit gewellten Zement-Faserplatten. Die Faserplatten sind mit 6O bezeichnet und werden am Wellenhöchsten 62 mit Polyurethanschaumkleber an den Faserplatten verklebt.

## Patentansprüche

1. Dachbegrünung, bestehend aus einem Wachstumsschicht, dadurch gekennzeichnet, daß die Wachstumschicht (4) zwischen einer wachstumdurchlässigen Deckschicht (1) und einer Trägerschicht (2) angeordnet ist, wobei alle Schichten (1,2,4) miteinander verbunden sind.

2. Dachbegrünung nach Anspruch 1, gekennzeichnet durch eine Vorbegrünung.

3. Dachbegrünung nach Anspruch 1 oder 2, dadurch gekennzeichnet, daß die Deckschicht (1) und/oder die Trägerschicht (2) aus einem Vlies besteht.

4. Dachbegrünung nach Anspruch 3, gekennzeichnet durch ein Flächengewicht von 3O bis 3OO g pro Quadratmeter für das Vlies.

5. Dachbegrünung nach einem der Ansprüche 1 bis 4, gekennzeichnet durch eine vollflächige Verbindung der Deck- und oder Trägerschicht (1,2).

6. Dachbegrünung nach einem der Ansprüche 1 bis 5, gekennzeichnet durch eine Verbindung mittels Nähen, Nadeln oder Schweißen.

7. Dachbegrünung nach einem der Ansprüche 1 bis 6, dadurch gekennzeichnet, daß die Zwischenschicht in einer Schlingenmatte gehalten ist.

8. Dachbegrünung nach Anspruch 7, gekennzeichnet durch eine separate Schlingenmatte oder eine mit der Trägerschicht vorverbundene Schlingenmatte oder eine mit der Trägerschicht oder aus der Trägerschicht gefertigte Schlingenmatte.

9. Dachbegrünung nach einem der Ansprüche 1 bis 8, gekennzeichnet durch eine Wachstumsschicht aus Samen und/oder Pflänzlingen und/oder Ablegern und/oder Nährstoffen und/oder Wasserspeichermaterial.

10. Dachbegrünung nach Anspruch 9, gekennzeichnet durch Ableger aus zerschnittenen Pflanzen.

11. Dachbegrünung nach einem der Ansprüche 6 bis 10, dadurch gekennzeichnet, daß die Wachstumsschicht in die Schlingenmatte eingerüttelt oder eingeblasen wird.

12. Dachbegrünung nach einem der Ansprüche 6 bis 11, dadurch gekennzeichnet, daß zum Verschweißen der Schlingenmatte Schlingen aus der Wachstumsschicht vorragen.

13. Dachbegrünung nach einem oder mehreren der Ansprüche 1 bis 12, gekennzeichnet durch eine Kombination der Wachstumsmatte (12,15,21,24) mit einer Kunststoffschaumschicht.

14. Dachbegrünung nach Anspruch 13, gekennzeichnet durch Begrünungselemente in Form von Platten.

15. Dachbegrünung nach Anspruch 14, gekennzeichnet durch frei einstellbare Plattenlängen für die Begrünungselemente.

16. Dachbegrünung nach Anspruch 14 und 15, gekennzeichnet durch Elementbreiten entsprechend der maximalen Fertigungsbreite der Kunststoffschaumplatten.

17. Dachbegrünung nach einem der Ansprüche 13 bis 16, gekennzeichnet durch auswechselbarre Begrünungselemente.

18. Dachbegrünung nach einem der Ansprüche 13 bis 17, gekennzeichnet durch die Kombination von Begrünungselementen mit unterschiedlichem Bewuchs.

19. Dachbegrünung nach einem der Ansprüche 13 bis 18, dadurch gekennzeichnet, daß der Kunststoffschaum zugleich den Schutz gegen Durchwurzelung bildet.

20. Dachbegrünung nach einem der Ansprüche 13 bis 19, gekennzeichnet durch die Verwendung für Leichtdächer.

21. Dachbegrünung nach einem der Ansprüche 13 bis 20, gekennzeichnet durch die Verwendung für Flachdächer und Schrägdächer.

22. Dachbegrünung nach einem der Ansprüche 13 bis 2O, gekennzeichnet durch die Befestigung der Begrünungselemente.

23. Dachbegrünung nach Anspruch 22, gekennzeichnet durch die Befestigung mittels Kleber oder mittels Verbindungselemente..

24. Dachbegrünung nach Anspruch 22 oder 23, gekennzeichnet durch die Befestigung am Wellenhöchsten von Wellplattendächern.

25. Dachbegrünung nach einem der Ansprüche 13 bis 24, dadurch gekennzeichnet, daß die Begrünungselemente am Firstbereich aneinanderstoßen und/oder mit einer Fugenabdichtung versehen sind und/oder zwischen Dach und Begrünungselementen eine Abdichtung vorgesehen ist.

26. Dachbegrünung nach einem der Ansprüche 13 bis 18 und 19 bis 25, gekennzeichnet durch eine Beschwerungsschicht.

27. Dachbegrünung nach Anspruch 26, gekennzeichnet durch einen Beschwerungssack (17) oder Schlauch.

28. Dachbegrünung nach Anspruch 27, gekennzeichnet durch einen gekammerten Beschwerungssack.

29. Dachbegrünung nach Anspruch 28, dadurch gekennzeichnet, daß der Sack aus zwei Vliesbahnen (5O,51) gefertigt ist, die durch Stege (52) miteinander verbunden sind.

30. Dachbegrünung nach Anspruch 29, gekennzeichnet durch Z-förmig angeordnete Stege (52).

31. Dachbegrünung nach Anspruch 29 oder 30, dadurch gekennzeichnet, daß die Stege (52) geklebt oder geschweißt oder genadelt oder genäht sind.

32. Dachbegrünung nach Anspruch 27, gekennzeichnet durch mehrere nebeneinander liegende Schläuche.

33. Dachbegrünung nach Anspruch 32, gekennzeichnet durch zwei Vliesbahnen (53,54), von denen eine in Schlaufen gelegt mit der anderen verbunden ist.

34. Dachbegrünung nach einem der Ansprüche 26 bis 33, gekennzeichnet durch eine Beschwerungsschicht mit Ziegelsplit.

35. Dachbegrünung nach einem der Ansprüche 13 bis 34, gekennzeichnet durch Mattenzuschnitte, deren Ränder (13,16) um die Plattenränder herumgefaltet und dort befestigt werden können.

36. Dachbegrünung nach Anspruch 35, gekennzeichnet durch eine Klebung der Mattenränder (13,16) und /oder durch eine Klemmung mittels Schnur(27) oder Bändern.

37. Dachbegrünung nach Anspruch 36, gekennzeichnet durch eine Nut (25) im Plattenrand und daß die Schnur (27) oder Band in die Nut drückt.

38. Dachbegrünung nach Anspruch 36 oder 37, dadurch gekennzeichnet, daß die Bandenden durch einen Verschluß gehalten werden.

39. Dachbegrünung nach einem der Ansprüche 13 bis 38, gekennzeichnet durch einen Nut/Feder-Verbindung oder eine Stufenfalzverbindung der Plattenränder.

40. Dachbegrünung nach Anspruch 39, dadurch gekennzeichnet, daß die Plattenränder vollständig umlaufende Vorsprünge oben oder unten aufweisen.

41. Dachbegrünung nach einem der Ansprüche 13 bis 40, gekennzeichnet durch eine Plattenlänge, die jeweils zwei Auflagen überspannt.

42. Dachbegrünung nach einem der Ansprüche 13 bis 41, dadurch gekennzeichnet, daß der Plattenrand um die Randdicke der Wachstumsmatten abgearbeitet ist.

43. Dachbegrünung nach einem der Ansprüche 13 bis 42, gekennzeichnet durch Polyurethankleber und/oder Montagekleber und/oder Bitumenkleber.

44. Dachbegrünung nach einem der 13 bis 43, gekennzeichnet durch eine Balken für die Begrünungselemente am unteren Dachende.
